# EUROPÄISCHE PATENTSCHRIFT

(11) **EP 2 700 511 B1**
(45) Veröffentlichungstag und Bekanntmachung des Hinweises auf die Patenterteilung: **25.05.2016**
(21) Anmeldenummer: 13180800.8
(22) Anmeldetag: 19.08.2013
(51) Int. Cl.: B44C 5/04, B32B 38/18

(54) **Verfahren zur Herstellung von beidseitig mit Dekorpapier beschichteten Platten und Dekorpapier zur Herstellung solcher Platten**
Process for producing boards coated with decorative paper on both sides and decorative paper for producing such boards
Procédé de fabrication de plaques revêtues des deux côtés avec du papier décoratif et papier décoratif pour la fabrication de telles plaques

(30) Priorität: 21.08.2012 DE 102012107665
(43) Veröffentlichungstag der Anmeldung: 26.02.2014
(73) Patentinhaber: Fritz Egger GmbH & Co. OG, 6380 St. Johann in Tirol (AT)
(72) Erfinder: Steinwender, Martin, Dr., 2380 Perchtoldsdorf (AT); Arthold, Andreas, 6382 Kirchdorf i. T. (AT)
(74) Vertreter: Cohausz & Florack

(56) Entgegenhaltungen:
- EP-A1- 2 316 662
- EP-A1- 2 338 693
- WO-A1-97/31776
- WO-A1-98/21035
- DE-A1- 10 356 427
- DE-A1-102005 020 456

## Beschreibung

Die Erfindung betrifft ein Verfahren zur Herstellung einer dekorativen, laminierten Platte mittels einer Presse, bei dem eine Trägerplatte in der Presse beidseitig mit Dekorpapier beschichtet wird, wobei das Dekorpapier ein Holzdekor, Natursteindekor oder Fliesendekor als graphisches Dekor aufweist, bei dem mittels der Presse in die Ober- und Unterseite der Platte eine dreidimensionale Struktur derart eingeprägt wird, dass die Struktur jeweils deckungsgleich zu dem beidseitig der Trägerplatte aufgebrachten Dekor ausgebildet ist, und bei dem die Lage des Dekorpapiers mittels einer Sensorvorrichtung erfasst und das Dekorpapier und/oder ein die dreidimensionale Struktur erzeugendes Strukturgebermittel mittels einer Ausrichtevorrichtung so ausgerichtet wird/werden, dass das Dekor im Wesentlichen in Deckungsgleichheit mit dem die dreidimensionale Struktur erzeugenden Strukturgebermittel gebracht wird. Des Weiteren betrifft die Erfindung ein Dekorpapier zur Herstellung einer dekorativen, laminierten Platte, die beidseitig mit Dekorpapier beschichtet ist, wobei das Dekorpapier ein Holzdekor, Natursteindekor oder Fliesendekor als graphisches Dekor aufweist und zur Beschichtung der Unterseite der Platte geeignet ist.

Dekorative Platten, die eine Substratschicht aus Holzwerkstoff und ein harzgetränktes Dekorpapier, insbesondere ein Holzdekor oder Steindekor auf wenigstens einer Seite der Substratschicht aufweisen, sind bekannt. Solche dekorativen Platten werden bevorzugt zur Herstellung von Möbeln verwendet. Dabei besteht die Forderung, dass das gewählte Dekor, beispielsweise ein eine Holzmaserung darstellendes Dekor möglichst naturgetreu nachgebildet wird. Aus diesem Grunde werden Strukturgebermittel, beispielsweise Pressbleche verwendet, die eine dreidimensionale Oberflächenstruktur, vorzugsweise einen Negativabdruck der nachzubildenden Materialstruktur aufweisen. Somit kann beim Pressvorgang die Struktur des Strukturgebermittels auf die Platte übertragen werden. Auf diese Weise können zum Beispiel Holzporen durch das Einprägen entsprechender Vertiefungen nachgebildet werden.

Unter Strukturgebermittel werden im vorliegenden Kontext Pressbleche von Taktpressen sowie Pressbänder von kontinuierlich arbeitenden Pressen, insbesondere Doppelbandpressen, aber auch Strukturgeberfolien, die als einzelne Bögen oder endlos ausgeführt sind, verstanden.

Damit die fertige Platte in optischer und haptischer Hinsicht einer natürlichen Holzplatte bzw. Steinplatte möglichst nahekommt, wird das graphische Dekor des Dekorpapiers mit der Struktur des Strukturgebermittels, beispielsweise Pressbleches in passgenaue Deckung gebracht. Hierzu werden üblicherweise optische Sensorvorrichtungen und Ausrichtevorrichtungen verwendet, welche die Lage des Dekorpapiers erfassen (z.B. anhand von Markierungen am Rand des aufgedruckten Dekors) und das Dekorpapier erforderlichenfalls so ausrichten, dass das graphische Dekor zumindest im Wesentlichen in Deckungsgleichheit mit der dreidimensionalen Struktur des in der Presse befindlichen Pressbleches gebracht wird. Diese Technologie bzw. die so hergestellten Prägung wird auch als "embossed in register" (= passgenaue oder deckungsgleiche Prägung), "Synchronpore" oder "Realpore" bezeichnet.

Diese Technologie wird üblicherweise nur auf einer Plattenseite, nämlich der Plattenoberseite angewendet. Denn eine Anwendung auf der Unterseite der Platte gestaltet sich erheblich schwieriger, da die optischen Sensorvorrichtungen, z.B. Kameras, wenn sie auf die Plattenunterseite gerichtet werden, leicht verschmutzen sowie beschädigt werden können.

In der EP 2 316 662 A1 wird eine dekorative Werkstoffplatte beschrieben, die beidseitig eine Dekorschicht und eine passgenaue Prägung aufweist, wobei die mittels Pressblechen eingeprägten Strukturen zu beiden Seiten der Werkstoffplatte deckungsgenau ausgebildet sind. Um die dafür erforderlichen Pressbleche variabel an der Oberseite oder der Unterseite sowie unabhängig von der Dekorrichtung verwenden zu können, wird in dieser Druckschrift zudem ein Pressblech vorgeschlagen, das eine Oberflächenstruktur aufweist, welche von der Mitte ausgehend zur Längs- und/oder Querrichtung symmetrisch ausgebildet ist. Einen Hinweis, wie die Ausrichtung der Dekorpapiere relativ zu dem oberen oder unteren Pressblech erfolgen soll, enthält diese Druckschrift nicht.

Die DE 10 2005 020 456 A1 offenbart ein Verfahren zum Herstellen von strukturierten Verbundwerkstoffplatten in einer Presse, bei dem Trägerplatten auf der Oberseite mit Dekorpapier und auf der Rückseite mit Gegenzugpapier beschichtet werden. Die Presse ist dabei mit einem strukturierten Pressblech ausgerüstet, welches eine dem Dekor zugeordnete Oberflächenstruktur aufweist. Die jeweilige Pressgutcharge wird vor dem Pressen ausgerichtet, so dass das Dekor mit der zugeordneten Struktur des Pressblechs deckungsgleich korrespondiert. Das Dekorpapier ist hierzu mit mehreren Ausrichtmarkierungen versehen, die mittels Kameras von der Oberseite des Dekorpapers her erfasst werden.

Die DE 103 56 427 A1 offenbart ein Verfahren zum deckungsgleichen Ablegen von aus Dekorfolien und Trägerplatten bestehenden Presspaketen auf die Pressfläche einer Kurztaktpresse. Hierzu werden an den Rändern der Dekorfolien Ausrichtmarkierungen und an den zugehörigen Stellen des Pressbleches gleichartige Ausrichtmarkierungen in Form von Erhöhungen oder Vertiefung angebracht.

Der vorliegenden Erfindung liegt die Aufgabe zugrunde, ein Verfahren der eingangs genannten Art anzugeben, mit dem dekorative, laminierte Platten, die beidseitig mit Dekorpapier beschichtet sind und beidseitig Synchronporen aufweisen, in zuverlässiger Weise hergestellt werden können.

Gelöst wird diese Aufgabe durch ein Verfahren mit den Merkmalen des Anspruchs 1. Bevorzugte und vorteilhafte Ausgestaltungen des erfindungsgemäßen Verfahrens ergeben sich aus den Unteransprüchen.

Das erfindungsgemäße Verfahren ist dadurch gekennzeichnet, dass zumindest als Dekorpapier für die Unterseite der Trägerplatte Dekorpapier verwendet wird, welches mindestens eine von der Dekorpapierrückseite her mittels der Sensorvorrichtung erfassbare Markierung oder mindestens ein von der Dekorpapierrückseite her mittels der Sensorvorrichtung erfassbares als Markierung fungierendes Element aufweist, und dass diese Markierung oder dieses als Markierung fungierende Element von der Dekorpapierrückseite her mittels der Sensorvorrichtung erfasst wird.

Die Verwendung von gemäß der Erfindung ausgeführtem Dekorpapier ermöglicht eine sichere Platzierung und verschmutzungsunempfindliche Ausrichtung des mindestens einen Sensors, mittels dem die Markierung, welche die Lage des an der Unterseite der Trägerplatte anzubringenden Dekorpapiers definiert, erfasst wird. Auf diese Weise lässt sich eine zuverlässige Herstellung von dekorativen Platten, die beidseitig mit Dekorpapier beschichtet sind und beidseitig Synchronporen aufweisen, in hoher Qualität erzielen.

Es versteht sich, dass bei dem erfindungsgemäßen Verfahren nicht in jedem Fall eine Ausrichtung des Dekorpapiers und/oder des die dreidimensionale Struktur erzeugenden Strukturgebermittels erfolgen muss. Denn liegt das beispielsweise auf einer Beschickungsvorrichtung der Presse aufgelegte Dekorpapier in Bezug auf das Strukturgebermittel bereits so, dass sich das Dekor im Wesentlichen in Deckungsgleichheit mit dem die dreidimensionale Struktur erzeugenden Strukturgebermittel befindet bzw. sich diese Deckungsgleichheit beim Zuführen des Dekorpapiers in die Presse ergibt, so ist eine Ausrichtung nicht erforderlich. Wird allerdings mittels der Sensorvorrichtung eine Lage des Dekorpapiers erfasst, in welcher die gewünschte Deckungsgleichheit nicht vorliegt bzw. sich diese beim Zuführen des Dekorpapiers in die Presse nicht zwangsläufig ergibt, so erfolgt eine Ausrichtung des Dekorpapiers und/oder des die dreidimensionale Struktur erzeugenden Strukturgebermittels, wodurch das Dekor im Wesentlichen in Deckungsgleichheit mit dem die dreidimensionale Struktur erzeugenden Strukturgebermittel gebracht wird.

Ferner ist zu berücksichtigen, dass die Erzielung einer vollkommenen Deckungsgleichheit des Dekors mit der dreidimensionalen Struktur praktisch kaum möglich ist oder auch nicht unbedingt erforderlich ist. Für die Erzielung einer zufriedenstellenden Synchronpore (d.h. Deckungsgleichheit von Dekor und dreidimensionaler Struktur) ist daher entscheidend, dass das Dekor im Wesentlichen in Deckungsgleichheit mit dem die dreidimensionale Struktur erzeugenden Strukturgebermittel gebracht wird.

Eine vorteilhafte Ausgestaltung des erfindungsgemäßen Verfahrens ist dadurch gekennzeichnet, dass die Trägerplatte so auf das für die Unterseite der Platte verwendete Dekorpapier gelegt wird, dass die Trägerplatte die mindestens eine Markierung oder das mindestens eine als Markierung fungierende Element nicht verdeckt. Die mindestens eine Markierung bzw. das mindestens eine als Markierung fungierende Element ist dabei in einem Randbereich des Dekorpapiers angeordnet, der beim Besäumen der fertigen laminierten Platte von dieser abgetrennt wird. Diese Ausgestaltung gestattet eine Erfassung der Markierung bzw. des als Markierung fungierenden Elements durch eine rückseitig des Dekorpapiers angeordnete Sensorvorrichtung auch dann, wenn die mit dem Dekorpapier zu beschichtende Trägerplatte auf dem Dekorpapier liegt. Somit ermöglicht diese Ausgestaltung die Erfassung der Lage des Dekorpapiers für dessen Ausrichtung in Bezug auf das Strukturgebermittel, z.B. Pressblech, nicht nur am Anfang des Transportweges einer Beschickungsvorrichtung, mittels der die Presse mit der aus Dekorpapier und Trägerplatte gebildeten Charge beschickt wird, sondern bei Bedarf auch eine Erfassung der Lage des Dekorpapiers auf dem Transportsweg in die Presse, insbesondere kurz vor der Presse oder sogar innerhalb der geöffneten Presse. Hierdurch kann ein eventuelles Verrutschen des Dekorpapiers auf dem Transportweg in die Presse noch rechtzeitig vor Schließen der Presse behoben werden. Denn es ist durchaus möglich, dass die Charge, insbesondere das Dekorpapier, nach Ausrichtung in eine deckungsgleiche Lage in Bezug auf das Strukturgebermittel, auf dem Transportweg in die Presse aus der deckungsgleichen Lage verrutscht. Je näher die Erfassung der Lage des auf die Plattenunterseite anzubringenden Dekorpapiers und dessen gegebenenfalls erforderliche Ausrichtung in Bezug auf das Strukturgebermittel an der Presse erfolgt, desto einfacher ist es, eine hohe Deckungsgleichheit von graphischem Dekor und eingeprägter Struktur zu erzielen.

Nach einer bevorzugten Ausgestaltung der Erfindung wird das Ausrichten der Lage des Dekorpapiers relativ zur Lage des Strukturgebermittels daher innerhalb der Presse durchgeführt. Dies kann durch eine Lageänderung des Dekorpapiers und/oder durch eine Lageänderung des Strukturgebermittels bewerkstelligt werden. Insbesondere ist es möglich, einen Bogen einer Strukturgeberfolie oder auch den entsprechenden Abschnitt eines endlosen Bandes einer Strukturgeberfolie unmittelbar vor dem Schließen der Presse dekorsynchron auszurichten.

Alternativ kann bei dem erfindungsgemäßen Verfahren das Ausrichten des Dekorpapiers aber auch vor dessen Zuführung in die Presse durchgeführt werden. Diese Ausgestaltung des erfindungsgemäßen Verfahrens ist insbesondere dann zweckmäßig, wenn die Beschickungsvorrichtung der Presse eine Qualität besitzt, die ein Verrutschen des in Bezug auf die Struktur des Strukturgebermittels ausgerichteten Dekorpapiers während der Beschickung der Presse sicher ausschließt.

Nach einer bevorzugten Ausgestaltung der Erfindung, ist die mindestens eine Markierung auf dem für die Plattenunterseite bestimmten Dekorpapier eine auf die Rückseite des Dekorpapiers gedruckte graphische Marke, wobei die Sensorvorrichtung einen spektralen, insbesondere einen optischen Sensor zum Erfassen der Markierung aufweist. Diese Ausgestaltung ermöglicht die Nutzung bewährter optischer Sensoren, wie sie bereits für die Erkennung von Markierungen zur Lageerfassung von für die Beschichtung der Plattenoberseite bestimmtem Dekorpapier verwendet werden.

Eine weitere vorteilhafte Ausgestaltung der Erfindung ist dadurch gekennzeichnet, dass die mindestens eine Markierung eine auf die Vorderseite des Dekorpapiers aufgebrachte graphische Marke ist, die einen Stoff enthält, der eine Erfassung der Markierung durch das Dekorpapier hindurch ermöglicht. Dies kann beispielsweise spektroskopisch, insbesondere auf optischem Wege erfolgen. Bei dem in der graphischen Marke enthaltenen Stoff handelt es sich beispielsweise um einen mittels einer Infrarot- und/oder UV-Sensoreinheit, insbesondere einer Wärmebildkamera detektierbaren Stoff, wobei die Markierung und damit der Stoff gegebenenfalls vor einer Abtastung aktiviert, beispielsweise erwärmt und/oder bestrahlt wird. Diese Ausgestaltung hat den Vorteil, dass die Markierung sowohl von der Rückseite als auch von der Vorderseite des Dekorpapiers aus mittels einer geeigneten Sensorvorrichtung erfasst werden kann. Unabhängig davon, ob das Dekorpapier zur Beschichtung der Plattenunterseite oder der -oberseite verwendet wird, kann die Markierung in diesem Fall stets auf die Vorderseite des Dekorpapiers aufgebracht werden. Dies vereinfacht die Herstellung der Markierung zur Bereitstellung von für die Durchführung des erfindungsgemäßen Verfahrens geeignetem Dekorpapier. Außerdem ermöglicht diese Ausgestaltung grundsätzlich auch dann noch eine Erfassung der Markierung, wenn diese durch die Platte verdeckt ist.

Nach einer anderen vorteilhaften Ausgestaltung der Erfindung ist das mindestens eine als Markierung fungierende Element ein auf die Vorderseite des Dekorpapiers aufgebrachtes magnetisch oder induktiv wirksames Element ist, wobei die Sensorvorrichtung hergerichtet ist, ein Magnetfeld oder eine Änderung eines Magnetfeldes zu erfassen. Auch diese Ausgestaltung des erfindungsgemäßen Verfahrens hat den Vorteil, dass die Markierung sowohl von der Rückseite als auch von der Vorderseite des Dekorpapiers aus mittels einer geeigneten Sensorvorrichtung erfasst werden kann. Die Markierung kann hierzu immer auf der gleichen Seite des Dekorpapiers, vorzugsweise auf dessen Vorderseite aufgebracht werden, was die Herstellung der Markierung zur Bereitstellung von für die Durchführung des erfindungsgemäßen Verfahrens geeignetem Dekorpapier vereinfacht. Ferner ermöglicht diese Ausgestaltung auch dann noch eine Erfassung des als Markierung fungierenden Elements, wenn dieses durch die Platte verdeckt ist.

Eine weitere vorteilhafte Ausgestaltung der Erfindung sieht vor, dass das mindestens eine als Markierung fungierende Element eine Durchbrechung des Dekorpapiers ist, wobei die Durchbrechung in einem Randbereich des Dekorpapiers angeordnet ist und sich in ihrer Form von unregelmäßigen Papierausbrüchen unterscheidet. Das als Markierung fungierende Element lässt bei dieser Ausgestaltung der Erfindung ebenfalls von beiden Seiten des Dekorpapiers aus detektieren. Die Herstellung der Durchbrechung ist einfach und kostengünstig. Durch eine geeignete Form der Durchbrechung, die sich signifikant von einer möglichen Beschädigung des Dekorpapiers, welche typischerweise als unregelmäßiger Papierausbruch vorliegt, unterscheidet, können Verwechslungen mit eventuellen Beschädigungen des Dekorpapiers ausgeschlossen werden.

Gegenstand der Erfindung ist insbesondere ein Dekorpapier zur Herstellung einer dekorativen, laminierten Platte, die beidseitig mit Dekorpapier beschichtet ist und beidseitig eine Synchronpore aufweist, mit den Merkmalen des Anspruchs 11 oder 12. Das Dekorpapier weist ein Holzdekor, Natursteindekor oder Fliesendekor als graphisches Dekor auf und ist zur Beschichtung der Unterseite der herzustellenden dekorativen Platte geeignet. Um dekorative, laminierte Platten, die beidseitig mit Dekorpapier beschichtet sind und beidseitig Synchronporen aufweisen, in zuverlässiger Weise herstellen zu können, weist das Dekorpapier erfindungsgemäß mindestens eine Markierung auf, die von der Dekorpapierrückseite her mittels einer Sensorvorrichtung, die einen optischen Sensor zum Erfassen der Markierung aufweist, erfassbar ist, wobei die mindestens eine Markierung eine auf die Rückseite des Dekorpapiers gedruckte graphische Marke ist. Alternativ zu einer solchen graphischen Marke kann das Dekorpapier erfindungsgemäß auch mindestens ein als Markierung fungierendes Element aufweisen, das von der Dekorpapierrückseite her mittels einer Sensorvorrichtung, die hergerichtet ist, ein Magnetfeld oder eine Änderung eines Magnetfeldes zu erfassen, erfassbar ist, wobei das mindestens eine als Markierung fungierende Element ein auf die Vorderseite des Dekorpapiers aufgebrachtes magnetisch oder induktiv wirksames Element ist.

Nachfolgend wird die Erfindung anhand einer mehrere Ausführungsbeispiele darstellenden Zeichnung näher erläutert. Es zeigen schematisch:
- Fig. 1a) bis 1e): aufeinanderfolgende Verfahrensschritte zur Herstellung einer dekorativen Platte, die beidseitig mit Dekorpapier beschichtet ist und beidseitig eine in Bezug auf das Dekor im Wesentlichen deckungsgleiche dreidimensionale Struktur aufweist; und
- Fig. 2: einen Verfahrensschritt bzw. eine Kombination von Verfahrensschritten im Arbeitsablauf des erfindungsgemäßen Verfahrens als Variante zu den in Fig. 1 gezeigten Ausführungsbeispielen.

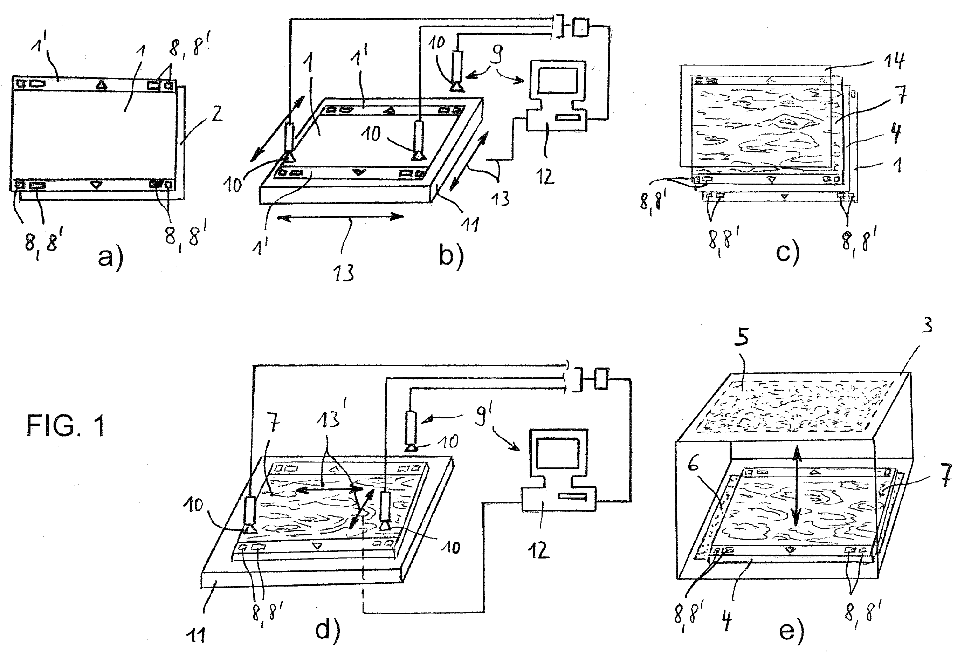

In Fig. 1a) ist dargestellt, dass zur Herstellung einer beidseitig mit Dekorpapier beschichteten dekorativen Platte, beispielsweise einer Möbelbauplatte, ein harzgetränktes Dekorpapier 1 auf eine transparente Deckschicht 2 gelegt wird. Die Deckschicht 2 dient als Verschleißschutz für das Dekor.

Das mit der Deckschicht 2 versehene Dekorpapier 1 wird nach weiteren Verfahrensschritten in einer beheizten Presse 3, beispielsweise in einer diskontinuierlich arbeitenden Kurztaktpresse, mit der Unterseite einer Trägerplatte 4 stoffschlüssig verbunden (vgl. Fig. 1e)). Als Trägerplatte 4 wird vorzugsweise eine Holzwerkstoffplatte, beispielsweise eine MDF-, HDF- oder Spanplatte, oder eine Schichtstoffplatte verwendet.

Das Dekorpapier 1 weist auf seiner der Deckschicht 2 zugewandten Vorderseite ein graphisches Dekor, beispielsweise ein Holzdekor, Natursteindekor oder Fliesendekor auf (nicht gezeigt). In Fig. 1 ist lediglich die Rückseite des für die Beschichtung der Unterseite der Trägerplatte 4 bestimmten Dekorpapiers 1 dargestellt. Damit das gewählte Dekor, beispielsweise ein eine Maserung aufweisendes Holzdekor, möglichst naturgetreu nachgebildet wird, ist die Presse 3 mit Strukturgebermitteln, beispielsweise Pressblechen 5, 6 ausgerüstet, die einen Negativabdruck der nachzubildenden Materialstruktur in Form einer dreidimensionalen Oberflächenstruktur aufweisen (Fig. 1e)). Beim Pressvorgang wird diese Struktur auf die Platte 4 übertragen.

Zur Erzielung einer qualitativ hochwertigen dekorativen Platte 4 wird die Oberflächenstruktur in die Ober- und Unterseite der Platte 4 eingeprägt, und zwar derart, dass die Struktur zumindest im Wesentlichen deckungsgleich mit dem graphischen Dekor des jeweiligen Dekorpapiers 1, 7 ausgebildet ist. Dies erfordert eine entsprechende Ausrichtung von Dekorpapier 1, 7 und zugeordnetem Strukturgebermittel, z.B. Pressblech 5, 6.

Hierzu weist das für die Unterseite der Platte 4 bestimmte Dekorpapier 1 mindestens eine von der Dekorpapierrückseite her mittels einer Sensorvorrichtung 9 erfassbare Markierung 8 oder mindestens ein entsprechend erfassbares als Markierung fungierendes Element 8' auf. Die Markierung 8 bzw. das als Markierung fungierende Element 8' können in verschiedener Weise realisiert sein.

Eine bevorzugte Ausgestaltung des erfindungsgemäßen Dekorpapiers 1 besteht darin, dass die mindestens eine Markierung 8 als graphische Marke ausgeführt ist, die auf die Rückseite des Dekorpapiers 1 aufgedruckt ist. Die Sensorvorrichtung 9 weist in diesem Fall einen optischen Sensor 10, beispielsweise eine Kamera zum Erfassen der Markierung 8 auf.

Alternativ kann die mindestens eine Markierung 8 auch eine auf die Vorderseite des Dekorpapiers 1 aufgebrachte graphische Marke sein, die einen Stoff enthält, der eine Erfassung der Markierung 8 durch das Dekorpapier 1 hindurch ermöglicht.

Nach einer anderen Ausgestaltung ist das mindestens eine als Markierung fungierende Element 8' ein auf die Vorderseite des Dekorpapiers 1 aufgebrachtes magnetisch oder induktiv wirksames Element. Die Sensorvorrichtung 9 ist in diesem Fall hergerichtet, ein Magnetfeld oder eine Änderung eines Magnetfeldes zu erfassen.

Bei den in den Figuren 1a) bis 1e) dargestellten Ausführungsbeispielen (Verfahrensschritten) weist das auf die Unterseite der Werkstoffplatte 4 aufzubringende Dekorpapier 1 mehrere solcher von der Rückseite des Dekorpapiers 1 her erfassbarer Markierungen 8 bzw. entsprechende als Markierung dienende Elemente 8' auf. Die Markierungen 8 bzw. entsprechenden Elemente 8' sind am Rand 1' bzw. an Rändern 1' des Dekorpapiers 1 angeordnet. Zur Erfassung der Markierungen 8 bzw. der als solche wirkenden Elemente 8' sind mehrere Sensoren 10 oberhalb einer die Deckschicht 2 und das Dekorpapier 1 tragenden, der Presse 3 zugeordneten Beschickungsanlage 11 angeordnet. Die Sensoren 10 sind an einer Regelungs- und/oder Steuerungsvorrichtung 12 angeschlossen, die eine Vorrichtung 13 zur Ausrichtung des Dekorpapiers (Ausrichtevorrichtung) in Abhängigkeit der von den Sensoren 10 abgegebenen Messsignale steuert (vgl. Fig. 1b). Die Ausrichtevorrichtung 13 ist schematisch durch Doppelpfeile angedeutet.

Handelt es sich bei den Markierungen 8 um auf die Rückseite des Dekorpapiers 1 aufgebrachte graphische Markierungen (Marken), so werden als Sensoren 10 Kameras verwendet. Die Regelungs- und/oder Steuerungsvorrichtung 12 enthält in diesem Fall ein Bilderkennungsprogramm und ein Ausrichtprogramm, die eine hochpräzise Ausrichtung des Dekorpapiers 1 in Bezug auf das zugeordnete Strukturgebermittel, z.B. Pressblech 6 bewirken.

Nach der Ausrichtung des auf die Unterseite der Werkstoffplatte aufzubringenden Dekorpapiers 1 werden mittels einer Präzisions-Legevorrichtung die Trägerplatte 4, das auf die Plattenoberseite aufzubringende Dekorpapier 7 und eine obere Deckschicht 14 auf dem Dekorpapier 1 abgelegt (Fig. 1c).

Anschließend wird die Lage des auf die Plattenoberseite aufzubringenden Dekorpapiers 7 wiederum mittels einer Sensorvorrichtung 9' erfasst und das Dekorpapier 7 erforderlichenfalls mittels einer Ausrichtevorrichtung 13' so ausgerichtet, dass das Dekor im Wesentlichen in Deckungsgleichheit mit dem ihm zugeordneten Strukturgebermittel, z.B. Pressblech 5 der Presse 3 gebracht wird. Es versteht sich, dass dabei die Lage des zuvor ausgerichteten Dekorpapiers 1 für die Plattenunterseite lagefixiert bleibt, beispielsweise indem es zusammen mit der Trägerplatte 4 in der Beschickungsanlage 11 mittels Klemmleisten und/oder Andruckelementen fixiert wird. Das auf die Plattenoberseite aufzubringende Dekorpapier 7 wird dann erforderlichenfalls relativ zu der Trägerplatte 4 verschoben, so dass es schließlich in Bezug auf die dreidimensionale Oberflächenstruktur des ihm zugeordneten Strukturgebermittels, z.B. Pressbleches 5 im Wesentlichen passgenau ausgerichtet ist. Die Ausrichtevorrichtung 13' ist in Fig. 1d) wiederum schematisch durch Doppelpfeile angedeutet.

Es liegt im Rahmen der Erfindung, für die Erfassung der Markierungen 8 bzw. der als Markierungen dienenden Elemente 8' des unteren Dekorpapiers 1 und des oberen Dekorpapiers 7 - nach Möglichkeit - die selben Sensoren, die selbe Sensorvorrichtung und/oder für das gegebenenfalls erforderliche Ausrichten der Dekorpapiere 1, 7 relativ zu dem jeweiligen Pressblech 5, 6 die selbe Ausrichtevorrichtung zu verwenden.

Alternativ oder ergänzend zu dem Ausrichten des oberen Dekorpapiers 7 und/oder des auf die Plattenunterseite aufzubringenden Dekorpapiers 1 in Bezug auf die dreidimensionale Struktur des zugeordneten Strukturgebermittels 5 bzw. 6, liegt es Rahmen der vorliegenden Erfindung, dass das obere Strukturgebermittel, z.B. Pressblech 5 und/oder das untere Strukturgebermittel, z.B. Pressblech 6 in Bezug auf das zugeordnete Dekor des Dekorpapiers 1 bzw. 7 ausgerichtet werden. Hierzu ist das betreffende Strukturgebermittel (z.B. Pressblech)5 bzw. 6 gegebenenfalls mit einer in der Presse 3 integrierten Ausrichtevorrichtung versehen. Wie bereits erwähnt, kann das Strukturgebermittel auch vorteilhaft als Strukturgeberfolie ausgebildet sein, die mittels einer innerhalb oder außerhalb der Presse angeordneten Ausrichtevorrichtung ausrichtbar ist. Insbesondere umfasst die vorliegende Erfindung eine Ausgestaltung, bei der die obere und/oder untere Strukturgeberfolie endlos ausgeführt und vor und hinter der Presse aufgewickelt ist/sind. Durch das Ab- bzw. Aufwickeln der jeweiligen Strukturgeberfolie kann die Ausrichtung in Vorschubrichtung der Trägerplatte erfolgen, wohingegen durch axiales Verändern der Lage der Strukturgeberfolienrollen die Ausrichtung quer zur Vorschubrichtung der Trägerplatte realisierbar ist.

Sodann wird die aus der Trägerplatte 4, den Dekorpapieren 1, 7 und den Deckschichten 2, 14 gebildete Charge entlang einer hochgenauen Führung in die Presse 3 transportiert, wo die ausgerichteten Dekorpapiere 1, 7 und die Deckschichten 2, 14 unter Wärmeeinwirkung mit der Trägerplatte 4 verpresst und dadurch stoffschlüssig miteinander verbunden werden.

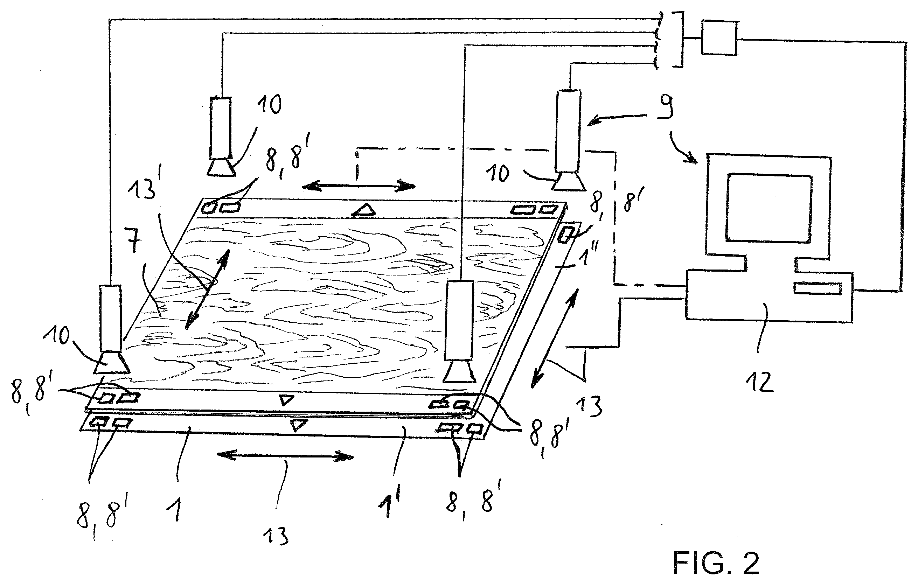

In Fig. 2 ist eine Variante des erfindungsgemäßen Verfahrens skizziert, bei der die Werkstoffplatte (Trägerplatte) 4 so auf das auf die Unterseite der Trägerplatte 4 aufzubringende Dekorpapier gelegt wird, dass die Platte 4 die mindestens eine Markierung 8 oder das mindestens eine als Markierung fungierende Element 8' des Dekorpapiers 1 nicht verdeckt.

Das für die Unterseite der Trägerplatte 4 bestimmte Dekorpapier 1 kann in diesem Fall wie bei den zuvor mit Bezug auf die Fig. 1a) bis 1e) beschriebenen Ausführungsbeispielen ausgeführt sein. Es kann also mehrere Markierungen 8 oder mehrere als Markierung fungierende Elemente 8' aufweisen, bei denen es sich insbesondere um graphische Markierungen (Marken) handeln kann.

Das auf die Unterseite der Trägerplatte 4 aufzubringende Dekorpapier 1 kann, sofern zwei von einander beabstandete Markierungen 8 bzw. zwei von einander beabstandete als Markierung fungierende Elemente 8' an einem einzelnen durch die Platte 4 nicht verdeckten Papierrand 1' nicht ausreichen sollten, um eine präzise Ausrichtung von Dekorpapier 1 und zugeordnetem Pressblech 6 zuverlässig zu erzielen, auch so bemessen und/oder angeordnet werden, dass mindestens zwei Papierränder 1', 1" durch die aufgelegte Platte 4 nicht verdeckt werden, wobei auf diesen Papierrändern 1', 1" dann mehr als zwei von einander beabstandete Markierungen 8 bzw. mehr als zwei von einander beabstandete als Markierung fungierende Elemente 8' vorgesehen sind (vgl. Fig. 2).

Die in Fig. 2 skizzierte Variante des erfindungsgemäßen Verfahrens ermöglicht ein Erfassen von graphischen Markierungen (Marken) 8 auch noch dann, wenn die Platte 4 auf dem unteren Dekorpapiers 1 abgelegt ist.

## Patentansprüche

1. Verfahren zur Herstellung einer dekorativen, laminierten Platte mittels einer Presse (3), bei dem eine Trägerplatte (4) in der Presse beidseitig mit Dekorpapier (1, 7) beschichtet wird, wobei das Dekorpapier auf seiner Vorderseite ein Holzdekor,
Natursteindekor oder Fliesendekor als graphisches Dekor aufweist, bei dem mittels der Presse in die Ober- und Unterseite der Platte eine dreidimensionale Struktur derart eingeprägt wird, dass die Struktur jeweils deckungsgleich zu dem beidseitig der Trägerplatte aufgebrachten Dekor ausgebildet ist, und bei dem die Lage des Dekorpapiers (1, 7) mittels einer Sensorvorrichtung (9) erfasst und das Dekorpapier (1, 7) und/oder ein die dreidimensionale Struktur erzeugendes Strukturgebermittel (5, 6) mittels einer Ausrichtevorrichtung (13, 13') so ausgerichtet wird/werden, dass das Dekor in Deckungsgleichheit mit dem die dreidimensionale Struktur erzeugenden Strukturgebermittel (5, 6) gebracht wird, **dadurch gekennzeichnet, dass** zumindest als Dekorpapier für die Unterseite der Trägerplatte (4) Dekorpapier (1) verwendet wird, welches mindestens eine von der Dekorpapierrückseite her mittels der Sensorvorrichtung (9) erfassbare Markierung (8) oder mindestens ein von der Dekorpapierrückseite her mittels der Sensorvorrichtung (9) erfassbares als Markierung fungierendes Element (8') aufweist, und dass diese Markierung (8) oder dieses als Markierung fungierende Element (8') von der Dekorpapierrückseite her mittels der Sensorvorrichtung (9) erfasst wird.

2. Verfahren nach Anspruch 1, **dadurch gekennzeichnet, dass** als Trägerplatte (4) eine Spanplatte, Faserplatte oder andere Holzwerkstoffplatte verwendet wird.

3. Verfahren nach Anspruch 1 oder 2, **dadurch gekennzeichnet, dass** die Trägerplatte (4) so auf das für die Unterseite der Platte verwendete Dekorpapier (1) gelegt wird, dass die Trägerplatte die mindestens eine Markierung (8) oder das mindestens eine als Markierung fungierende Element (8') nicht verdeckt.

4. Verfahren nach Anspruch 1 bis 3, **dadurch gekennzeichnet, dass** die mindestens eine Markierung (8) eine auf die Rückseite des Dekorpapiers (1) gedruckte graphische Marke ist, wobei die Sensorvorrichtung (9) einen optischen oder anderen spektralen Sensor (10) zum Erfassen der Markierung (8) aufweist.

5. Verfahren nach Anspruch 1 bis 3, **dadurch gekennzeichnet, dass** die mindestens eine Markierung (8) eine auf die Vorderseite des Dekorpapiers (1) aufgebrachte graphische Marke ist, die einen Stoff enthält, der eine optische oder andere spektrale Erfassung der Markierung (8) durch das Dekorpapier (1) hindurch ermöglicht.

6. Verfahren nach Anspruch 1 bis 3, **dadurch gekennzeichnet, dass** das mindestens eine als Markierung fungierende Element (8') ein auf die Vorderseite des Dekorpapiers (1) aufgebrachtes magnetisch oder induktiv wirksames Element (8') ist, wobei die Sensorvorrichtung (9) hergerichtet ist, ein Magnetfeld oder eine Änderung eines Magnetfeldes zu erfassen.

7. Verfahren nach Anspruch 1 bis 3, **dadurch gekennzeichnet, dass** das mindestens eine als Markierung fungierende Element (8') eine Durchbrechung des Dekorpapiers (1) ist, wobei die Durchbrechung in einem Randbereich des (1', 1") Dekorpapiers (1) angeordnet ist und sich in ihrer Form von unregelmäßigen Papierausbrüchen unterscheidet.

8. Verfahren nach einem der Ansprüche 1 bis 7, **dadurch gekennzeichnet, dass** das Ausrichten des Dekorpapiers (1) und/oder des Strukturgebermittels vor dem Zuführen des Dekorpapiers (1) in die Presse (3) durchgeführt wird.

9. Verfahren nach einem der Ansprüche 1 bis 7, **dadurch gekennzeichnet, dass** das Ausrichten des Dekorpapiers (1) und/oder des Strukturgebermittels nach Zuführen des Dekorpapiers (1) in die Presse (3) durchgeführt wird.

10. Verfahren nach Anspruch 1 oder 2, **dadurch gekennzeichnet, dass** die mindestens eine Markierung (8) oder das mindestens eine als Markierung fungierende Element (8') durch die Trägerplatte hindurch erfasst wird.

11. Dekorpapier zur Herstellung einer dekorativen, laminierten Platte (4), die beidseitig mit Dekorpapier (1, 7) beschichtet ist, wobei das Dekorpapier (1, 7) auf seiner Vorderseite ein Holzdekor, Natursteindekor oder Fliesendekor als graphisches Dekor aufweist und zur Beschichtung der Unterseite der Platte (4) geeignet ist, **gekennzeichnet durch** mindestens eine Markierung (8), die von der Dekorpapierrückseite her mittels einer Sensorvorrichtung (9), die einen optischen Sensor zum Erfassen der Markierung aufweist, erfassbar ist, wobei die mindestens eine Markierung (8) eine auf die Rückseite des Dekorpapiers (1) gedruckte graphische Marke ist.

12. Dekorpapier zur Herstellung einer dekorativen, laminierten Platte (4), die beidseitig mit Dekorpapier (1, 7) beschichtet ist, wobei das Dekorpapier (1, 7) auf seiner Vorderseite ein Holzdekor, Natursteindekor oder Fliesendekor als graphisches Dekor aufweist und zur Beschichtung der Unterseite der Platte (4) geeignet ist, **gekennzeichnet durch** mindestens ein als Markierung fungierendes Element (8'), das von der Dekorpapierrückseite her mittels einer Sensorvorrichtung (9), die hergerichtet ist, ein Magnetfeld oder eine Änderung eines Magnetfeldes zu erfassen, erfassbar ist, wobei das mindestens eine als Markierung fungierende Element (8') ein auf die Vorderseite des Dekorpapiers (1) aufgebrachtes magnetisch oder induktiv wirksames Element ist.

## Claims

1. Method for producing a decorative, laminated board by means of a press (3), in which method a base board (4) is covered on either side with decorative paper (1, 7) in the press, the decorative paper having a wood-effect decorative design, a natural stone-effect decorative design or a tile-effect decorative design as the graphic decorative design on its front side, in which the press is used to emboss a three-dimensional structure in the upper and underside of the board such that the structure is congruent with the decorative design applied to either side of the base board in each case, and in which the position of the decorative paper (1, 7) is detected by means of a sensor device (9) and the decorative paper (1, 7) and/or a structure-providing means (5, 6) which produces the three-dimensional structure is/are aligned by means of an aligning device (13, 13') such that the decorative design is made congruent with the structure-providing means (5, 6) which produces the three-dimensional structure, **characterised in that** decorative paper (1) is used at least as the decorative paper for the underside of the base board (4) and comprises either at least one marking (8) which can be detected from the rear side of the decorative paper by means of the sensor device (9) or at least one element (8') which acts as the marking and can be detected from the rear side of the decorative paper by means of the sensor device (9), and **in that** said marking (8) or said element (8') acting as the marking is detected from the rear side of the decorative paper by means of the sensor device (9).

2. Method according to claim 1, **characterised in that** chipboard, fibreboard or another wood-material board is used as the base board (4).

3. Method according to either claim 1 or claim 2, **characterised in that** the base board (4) is placed on the decorative paper (1) used for the underside of the board such that the base board does not cover the at least one marking (8) or the at least one element (8') acting as the marking.

4. Method according to claims 1 to 3, **characterised in that** the at least one marking (8) is a graphic mark printed on the rear side of the decorative paper (1), the sensor device (9) having an optical or other spectral sensor (10) for detecting the marking (8).

5. Method according to claims 1 to 3, **characterised in that** the at least one marking (8) is a graphic mark applied to the front side of the decorative paper (1) which contains a substance which makes it possible for the marking (8) to be detected through the decorative paper (1) either optically or in another spectral manner.

6. Method according to claims 1 to 3, **characterised in that** the at least one element (8') acting as the marking is either a magnetic or inductive element (8') which is applied to the front side of the decorative paper (1), the sensor device (9) being designed to detect a magnetic field or a change in a magnetic field.

7. Method according to claims 1 to 3, **characterised in that** the at least one element (8') acting as the marking is an opening in the decorative paper (1), the opening being arranged in an edge region (1', 1") of the decorative paper (1) and differing from irregular paper breaks in terms of its shape.

8. Method according to any of claims 1 to 7, **characterised in that** the decorative paper (1) and/or the structure-providing means is aligned before the decorative paper (1) is fed into the press (3).

9. Method according to any of claims 1 to 7, **characterised in that** the decorative paper (1) and/or the structure-providing means is aligned after the decorative paper (1) has been fed into the press (3).

10. Method according to either claim 1 or claim 2, **characterised in that** the at least one marking (8) or the at least one element (8') acting as the marking is detected through the base board.

11. Decorative paper for producing a decorative, laminated board (4) which is covered on either side with decorative paper (1, 7), the decorative paper (1, 7) having a wooden-effect decorative design, a natural stone-effect decorative design or a tile-effect decorative design as the graphic decorative design on its front side and being suitable for covering the underside of the board (4), **characterised by** at least one marking (8) which can be detected from the rear side of the decorative paper by means of a sensor device (9) comprising an optical sensor for detecting the marking, the at least one marking (8) being a graphic mark printed on the rear side of the decorative paper (1).

12. Decorative paper for producing a decorative, laminated board (4) which is covered on either side with decorative paper (1, 7), the decorative paper (1, 7) having a wooden-effect decorative design, a natural stone-effect decorative design or a tile-effect decorative design as a graphic decorative design on its front side and being suitable for covering the underside of the board (4), **characterised by** at least one element (8') which acts as the marking and can be detected from the rear side of the decorative paper by means of a sensor device (9) designed to detect a magnetic field or a change in a magnetic field, the at least one element (8') acting as the marking being a magnetic or an inductive element which is applied to the front side of the decorative paper (1).

## Revendications

1. Procédé de fabrication d'une plaque décorative, laminée, au moyen d'une presse (3), procédé selon lequel, dans ladite presse, une plaque de support (4) est revêtue, des deux côtés, avec du papier décoratif (1, 7), sachant que, sur sa face avant, le papier décoratif est doté d'un décor bois, d'un décor pierre naturelle ou d'un décor carrelage, en tant que décor graphique, une structure tridimensionnelle étant imprimée dans la face supérieure et la face inférieure de la plaque, au moyen de la presse, de telle manière que ladite structure soit en coïncidence respective avec le décor appliqué sur les deux côtés de la plaque de support, et la position de papier décoratif (1, 7) étant détectée par un dispositif de détection (9) et le papier décoratif (1, 7) et / ou le moyen de structuration (5, 6), réalisant une structure tridimensionnelle étant orienté / s à l'aide d'un dispositif d'orientation (13, 13') de telle manière que le décor soit appliqué en coïncidence avec le moyen de structuration (5, 6) qui réalise la structure tridimensionnelle, **caractérisé en ce que** l'on utilise, au moins come papier décoratif pour la face inférieure de la plaque de support (4), du papier décoratif (1) qui est doté d'au moins un marquage (8) pouvant être détecté au moyen du dispositif de détection (9), à partir de la face arrière du papier décoratif, ou d'au moins un élément servant de marquage (8'), pouvant être détecté au moyen du dispositif de détection (9), à partir de la face arrière du papier décoratif, et que ce marquage (8) ou cet élément servant de marquage (8') est saisi au moyen du dispositif de détection (9), à partir de la face arrière du papier décoratif.

2. Procédé selon la revendication 1,
**caractérisé en ce que**, comme plaque de support (4), on utilise une plaque de copeaux, une plaque de fibres ou tout autre plaque en matériau à base de bois.

3. Procédé selon revendication 1 ou 2,
**caractérisé en ce que** la plaque de support (4) est posée sur le papier décoratif, utilisé pour la face inférieure de la plaque, de telle manière que ladite plaque de support ne cache pas le marquage (8) au moins prévu ou l'élément servant de marquage (8') au moins prévu.

4. Procédé selon l'une des revendications 1 à 3,
**caractérisé en ce que** le marquage (8) au moins prévu est un marquage graphique qui est imprimé sur la face arrière du papier décoratif (1), sachant que, pour la détection du marquage (8), le dispositif de détection (9) est doté d'un détecteur optique ou de tout autre détecteur spectral (10).

5. Procédé selon l'une des revendications 1 à 3,
**caractérisé en ce que** le marquage (8) au moins prévu est un marquage graphique, imprimé sur la face avant du papier décoratif (1), qui contient une matière permettant une détection optique ou toute autre détection spectrale du marquage (8) à travers le papier décoratif (1).

6. Procédé selon l'une des revendications 1 à 3,
**caractérisé en ce que** l'élément, servant de marquage (8') au moins prévu est un élément magnétique actif ou inductif actif (8'), qui est appliqué sur la face avant du papier décoratif (1), sachant que le dispositif de détection (9) est conçu pour saisir un champ magnétique ou un changement du champ magnétique.

7. Procédé selon l'une des revendications 1 à 3,
**caractérisé en ce que** l'élément, servant de marquage (8') au moins prévu est un ajour qui est pratiqué dans le papier décoratif (1), sachant que l'ajour est disposé dans une région marginale (1', 1") du papier décoratif (1) et présente une forme qui diffère des déchirures de papier irrégulières.

8. Procédé selon l'une des revendications 1 à 7,
**caractérisé en ce que** l'orientation du papier décoratif (1) et / ou la structuration sont exécutées avant l'amenée du papier décoratif (1) dans la presse (3).

9. Procédé selon l'une des revendications 1 à 7,
**caractérisé en ce que** l'orientation du papier décoratif (1) et / ou la structuration sont exécutées après l'amenée du papier décoratif (1) dans la presse (3).

10. Procédé selon revendication 1 ou 2,
**caractérisé en ce que** marquage (8) au moins prévu ou l'élément servant de marquage (8') au moins prévu est détecté à travers la plaque de support.

11. Papier décoratif destiné à la fabrication d'une plaque décorative, laminée (4), qui est revêtue des deux côtés avec du papier décoratif (1, 7), sachant que le papier décoratif (1, 7) est doté, sur sa face avant, d'un décor bois, d'un décor pierre naturelle ou d'un décor carrelage, en tant que décor graphique, et est apte au revêtement de la face inférieure de la plaque (4), **caractérisé par** au moins un marquage (8) qui, à partir de la face arrière du papier décoratif, peut être détecté au moyen d'un dispositif de détection (9) qui est doté d'un détecteur optique pour la saisie du marquage, le marquage (8) au moins prévu étant une marque graphique, imprimée sur la face arrière du papier décoratif (1).

12. Papier décoratif destiné à la fabrication d'une plaque décorative, laminée (4), qui est revêtue des deux côtés avec du papier décoratif (1, 7), sachant que le papier décoratif (1, 7) est doté, sur sa face avant, d'un décor bois, d'un décor pierre naturelle ou d'un décor carrelage, en tant que décor graphique, et est apte au revêtement de la face inférieure de la plaque (4), **caractérisé par** au moins un élément servant de marquage (8'), qui, à partir de la face arrière du papier décoratif, peut être détecté au moyen d'un dispositif de détection (9) qui est conçu pour saisir un champ magnétique ou un changement du champ magnétique, sachant que l'élément servant de marquage (8') au moins prévu est un élément magnétique actif ou inductif actif (8'), qui est appliqué sur la face avant du papier décoratif (1).
